# EUROPÄISCHE PATENTSCHRIFT

(11) **EP 3 397 674 B1**
(45) Veröffentlichungstag und Bekanntmachung des Hinweises auf die Patenterteilung: **10.07.2019**
(21) Anmeldenummer: 16790352.5
(22) Anmeldetag: 02.11.2016
(51) Int. Cl.: C08G 77/06, C08G 77/16, A61K 8/89

(54) **VERFAHREN ZUR HERSTELLUNG VON SIOH-FUNKTIONELLEN POLYSILOXANEN**
METHOD FOR PRODUCING SIOH-FUNCTIONAL POLYSILOXANES
PROCÉDÉ POUR LA PRÉPARATION DE POLYSILOXANES À FONCTIONNALITÉ SIOH

(43) Veröffentlichungstag der Anmeldung: 07.11.2018
(73) Patentinhaber: Wacker Chemie AG, 81737 München (DE)
(72) Erfinder: LOESSEL, Georg, 84547 Emmerting (DE); BETSCHINGER, Frank, 84503 Altötting (DE); MEISENBERGER, Manfred, 5122 Hochburg (AT)
(74) Vertreter: Fritz, Helmut
(86) Internationale Anmeldenummer: PCT/EP2016/076403
(87) Internationale Veröffentlichungsnummer: WO 2018/082766

(56) Entgegenhaltungen:
- DE-A1- 19 800 023
- DE-A1-102013 212 980

## Beschreibung

Die Erfindung betrifft ein kontinuierliches Verfahren zur Herstellung von SiOH-funktionellen Polysiloxanen mit niedrigem Molekulargewicht.

DE 102013212980 beschreibt, dass SiOH-funktionelle Polyphenylsiloxane mittels einem kontinuierlichen Verfahren herstellbar sind, wobei unter anderem die Chlorsilane in einem Gewichtsanteil von 95% bis 60% und die Alkoxysilane in einem Gewichtsanteil von 5% bis 40% bezogen auf die Summe aus Chlorsilanen und Alkoxysilanen parallel mit Wasser und einem nicht polaren Lösemittel der Reaktionsapparatur zudosiert werden.

Die langjährige technische Erfahrung im Umgang mit diesen Polysiloxanharzen zeigt, dass hohe Molekulargewichte Mw > 3000g/mol, für oberflächensensible Beschichtungsanwendungen nicht geeignet sind. Hier werden vorzugsweise Produkte mit Molekulargewichten < 3000 g/mol verarbeitet.

Allerdings treten beim Verfahren der DE 102013212980 besonders bei der Herstellung von Polymethylsiloxan enthaltenden Polyphenylsiloxanen Probleme mit nicht gewünschten hohen Molekulargewichten Mw > 3000 g/mol auf.

Gegenstand der Erfindung ist ein kontinuierliches Verfahren zur Herstellung von Organopolysiloxanen mit einem OH-Gehalt von 3,0 - 10,0 Gew.-%, bei dem Silane der allgemeinen Formel I

R¹ₘSiR²ₙXₒ (I),

in der
- **R¹**: C₁-C₁₈-Kohlenwasserstoffrest und
- **R²**: C₁-C₆-Alkoxyrest und
- **X**: Chlor- oder Bromrest
- **m**: die Werte 1, 2 oder 3 bedeuten,
- **n**: die Werte 0, 1, 2 oder 3 bedeuten und
- **o**: die Werte 0, 1, 2 oder 3 bedeuten,
mit der Maßgabe, dass 4-m = n+o, und dass bei mindestens 30 Mol-% der Silane der allgemeinen Formel I n≠0 und o≠0, Wasser und unpolares nicht mehr als 1 g in 1 l Wasser bei 20°C und 1 bar lösliches Lösemittel kontinuierlich zum Reaktionsgemisch zudosiert werden und Reaktionsgemisch kontinuierlich abgeführt wird.

Durch den Einsatz von Silanen der allgemeinen Formel I mit sowohl C₁-C₆-Alkoxyresten als auch Chlor- und/oder Bromresten läuft die kontinuierliche Umsetzung gleichmäßiger ab und es werden Organopolysiloxane mit einheitlicheren und niedrigeren Molekulargewichten, insbesondere Molekulargewichte Mw < 3000g/mol erhalten.

Die Organopolysiloxane mit einem OH-Gehalt von 3,0 - 10,0 Gew.-% werden bei dem Verfahren auf einfache und kostengünstige Weise hergestellt. Es findet eine Hydrolyse-Kondensationsreaktion statt.

Im Gegensatz zu den bekannten Verfahren können die Organopolysiloxane mit einem OH-Gehalt von 3,0 - 10,0 Gew.-%, durch das erfindungsgemäße Verfahren auch unter Verzicht wasserlöslicher polarer Lösemittel einschließlich Alkohole mit sehr kurzen Verweilzeiten hergestellt werden. Durch die niedrigen Verweilzeiten sowie geringere Mengen an Alkoxysilanen wird die Bildung von Alkanchloriden aus Alkohol und HCl unterdrückt, die Menge an Alkohol reduziert.
Dies führt auch zu entscheidenden Kostenvorteilen gegenüber den bekannten kontinuierlichen und diskontinuierlichen Verfahren, da neben der größeren Durchsatzleistung durch geringe Verweilzeiten gleichzeitig der Aufwand der Abwasserbehandlung durch geringere Belastungen an CSB und POX deutlich reduziert werden kann. Ebenso weisen die Abwässer höhere Flammpunkte von über 55°C auf.

Die C₁-C₁₈-Kohlenwasserstoffreste **R¹** sind vorzugsweise C₁-C₆-Alkylreste, insbesondere Methyl-, Ethyl- oder Propylreste oder Phenylreste.

Vorzugsweise sind 10 bis 90 Mol-%, besonders bevorzugt 20 bis 80 Mol-%, insbesondere 30 bis 70 Mol-% der C₁-C₁₈-Kohlenwasserstoffreste **R¹** Phenylreste.

Die C₁-C₆-Alkoxyreste **R²** sind vorzugsweise Methoxy- oder Ethoxyreste.

Vorzugsweise weisen bei mindestens 80 Mol-%, insbesondere mindestens 95 Mol-% der Silane der allgemeinen Formel I **m** die Werte 1 oder 2 auf.
Vorzugsweise weist bei mindestens 50 Mol-%, besonders bevorzugt mindestens 70 Mol-%, insbesondere mindestens 90 Mol-% der Silane der allgemeinen Formel I **m** den Wert 1 auf.

Vorzugsweise bedeutet bei mindestens 50 Mol-%, besonders bevorzugt bei mindestens 60 Mol-%, insbesondere bei mindestens 70 Mol-% der Silane der allgemeinen Formel I n≠0 und o≠0.

Vorzugsweise werden die Silane der allgemeinen Formel I, Wasser und das unpolare Lösemittel kontinuierlich in einen Loopreaktor zum Reaktionsgemisch zudosiert und das Reaktionsgemisch aus dem Loopreaktor kontinuierlich abgeführt.

Es bilden sich eine Wasserphase und eine Lösemittelphase aus; diese werden innig vermischt. Vorzugsweise wird Wasser in solchen Mengen zudosiert, dass sich eine HCl-Konzentration in der Wasserphase von 5 - 35 Gew.-% einstellt.

Das unpolare Lösemittel ist vorzugsweise zu nicht mehr als 0,5 g in 1 l Wasser bei 20°C und 1 bar löslich. Beispiele für unpolare Lösemittel sind Kohlenwasserstoffe, wie Pentan, n-Hexan, Hexan-Isomerengemische, Heptan, Oktan, Waschbenzin, Petrolether, Benzol, Toluol, Xylole. Besonders bevorzugt sind Toluol und Xylole.

Polare Lösemittel, die nicht zudosiert werden, sind insbesondere Alkohole, wie Methanol und Ethanol: Ether, wie Dioxan, Tetrahydrofuran, Diethylether, Di-isopropylether, Diethylenglycoldimethylether; Ketone, wie Aceton, Methylethylketon, Di-isopropylketon, Methyl-isobutylketon (MIBK); Ester, wie Ethylacetat, Butylacetat, Propylpropionat, Ethylbutyrat, Ethyl-isobutyrat; Schwefelkohlenstoff und Nitrobenzol, oder Gemische dieser Lösungsmittel.

Vorzugsweise wird das unpolare Lösemittel dem Reaktionsgemisch in solchen Mengen zugeführt, dass sich Festgehalte von 25-45 Gew.-% einstellen. Der Festgehalt ist die Menge an gebildeten Organopolysiloxanen, die in der Lösemittelphase gelöst sind.

Vorzugsweise wird das in der Lösemittelphase gelöste Organopolysiloxan kontinuierlich von der Wasserphase getrennt.

Vorzugsweise wird das Organopolysiloxan destillativ vom Lösemittel befreit.

Silane der allgemeinen Formel I, Wasser und das unpolare Lösemittel werden vorzugsweise so zum Reaktionsgemisch zudosiert und Reaktionsgemisch so kontinuierlich abgeführt, dass sich sehr kurze Verweilzeiten von 1 Minute bis 30 Minuten, vorzugsweise 2 Minuten bis 15 Minuten einstellen.

Die Reaktionstemperatur beträgt vorzugsweise 20°C bis 100°C, besonders bevorzugt 40°C bis 80°C, insbesondere 50°C bis 70°C.

Der Reaktionsdruck beträgt vorzugsweise 0,05 MPa bis 1 MPa, besonders bevorzugt 0,08 MPa bis 0,2 MPa.

Vorzugsweise weisen die Organopolysiloxane mit einem OH-Gehalt von 3,0 - 10,0 Gew.-% die allgemeine Formel II

RₚSi0₄₋ₚ (II),

auf, in der
- **R**: OH, C₁-C₁₈-Kohlenwasserstoffrest oder C₁-C₆-Alkoxyrest und
- **p**: die Werte 0, 1, 2 oder 3 bedeuten und
- **p**: durchschnittliche Werte von 1, 0 bis 2,0 aufweist.

Der OH-Gehalt der Organopolysiloxane bezieht sich auf die direkt an Siliciumatome angebundenen OH-Gruppen. Er beträgt vorzugsweise 3,0 - 8,0 Gew.-%.

Vorzugsweise weist **p** die durchschnittlichen Werte von 1,4 bis 1,8 auf.

Vorzugsweise weisen die Organopolysiloxane mit einem OH-Gehalt von 3,0 - 10,0 Gew.-% ein mittleres Molekulargewicht Mw von 1500 bis 3500, besonders bevorzugt von 1800 bis 3000, insbesondere von 2000 bis 2900 auf. Vorzugsweise weisen die Organopolysiloxane eine Tg (Glasübergangstemperatur) von 30°C bis 80°C insbesondere von 35°C bis 75°C auf.

Bevorzugte Bedeutungen für **R** entsprechen den bevorzugten Bedeutungen von **R¹.**

In einer bevorzugten Ausführungsform werden die Silane der allgemeinen Formel I dadurch hergestellt, dass Halogensilane der allgemeinen Formel III

R¹_{q}SiX_{4-q} (III),

und Alkoxysilane der allgemeinen Formel IV

R¹ᵣSiR²₄₋ᵣ (IV),

miteinander umgesetzt werden, wobei
- **R¹**: C₁-C₁₈-Kohlenwasserstoffreste,
- **R²**: C₁-C₆-Alkoxyrest,
- **X**: Chlor- oder Bromrest und
- **q, r**: die Werte 1, 2 oder 3 bedeuten.

Dabei kommt es zu einem Ligandenaustausch zwischen **X** und **R².** Bevorzugte Bedeutungen für **R¹, R²,** und **X** sind bei der allgemeinen Formel I aufgeführt.

Vorzugsweise werden die Halogensilane der allgemeinen Formel III und Alkoxysilane der allgemeinen Formel IV in einem geeigneten Behältnis zusammengeführt.

Die Umsetzung zwischen den Halogensilanen der allgemeinen Formel III und den Alkoxysilanen der allgemeinen Formel IV wird vorzugsweise bei 0°C bis 100°C, besonders bevorzugt bei 10°C bis 60°C, insbesondere bei 20°C bis 40°C durchgeführt.

Die Reaktionszeit beträgt vorzugsweise 5 min bis 5 h, besonders bevorzugt 10 min bis 3 h, insbesondere 20 min bis 1,5 h.

Der Reaktionsdruck beträgt vorzugsweise 0,05 MPa bis 1 MPa, besonders bevorzugt 0,08 MPa bis 0,2 MPa.

Vorzugsweise werden die Halogensilane der allgemeinen Formel III in einem Gewichtsanteil von 80 % bis 50 % und die Alkoxysilane der allgemeinen Formel IV in einem Gewichtsanteil von 20 % bis 50 % bezogen auf die Summe aus Halogensilanen und Alkoxysilanen zudosiert.

Alle vorstehenden Symbole der vorstehenden Formeln weisen ihre Bedeutungen jeweils unabhängig voneinander auf. In allen Formeln ist das Siliciumatom vierwertig.

### Messmethoden für relevante Produktparameter

### Molekülzusammensetzungen:

Die Molekülzusammensetzungen werden mittels Kernresonanzspektroskopie bestimmt (zu Begrifflichkeiten siehe ASTM E 386: Hochauflösende magnetische Kernresonanzspektroskopie (NMR): Begriffe und Symbole), wobei der ¹H-Kern und der ²⁹Si-Kern vermessen wird.

### Beschreibung 1H-NMR Messung

Solvent: CDC l3, 99,8 Gew.-% d
Probenkonzentration: ca. 50 mg / 1 ml CDCl3 in 5 mm NMR-Röhrchen
Messung ohne Zugabe von TMS, Spektrenreferenzierung von Rest-CHCl₃ in CDCl3 auf 7,24 ppm
Spektrometer: Bruker Avance I 500 oder Bruker Avance HD 500 Probenkopf: 5 mm BBO-Probenkopf oder SMART-Probenkopf (Fa. Bruker)

### Meßparameter:

Pulprog = zg30
TD = 64k
NS = 64 bzw. 128 (abhängig von der Empfindlichkeit des Probenkopfes)
SW = 20,6 ppm
AQ = 3,17 s
D1 = 5 s
SFO1 = 500,13 MHz
O1 = 6,175 ppm

### Processing-Parameter:

SI = 32k
WDW = EM
LB = 0,3 Hz

Je nach verwendetem Spektrometertyp sind eventuell individuelle Anpassungen der Messparameter erforderlich.

Beschreibung ²⁹Si-NMR Messung
Solvent: C₆D₆ 99,8 Gew.-% d/CCl4 1:1 v/v mit 1 Gew.-% Cr(acac)3 als Relaxationsreagenz
Probenkonzentration: ca. 2 g / 1,5 ml Solvent in 10 mm NMR-Röhrchen
Spektrometer: Bruker Avance 300
Probenkopf: 10 mm 1H/13C/15N/29Si glasfreier QNP-Probenkopf (Fa. Bruker)

### Messparameter:

Pulprog = zgig60
TD = 64k
NS = 1024 (abhängig von der Empfindlichkeit des Probenkopfes)
SW = 200 ppm
AQ = 2,75 s
D1 = 4 s
SFO1 = 300,13 MHz
O1 = -50 ppm

### Processing-Parameter:

SI = 64k
WDW = EM
LB = 0,3 Hz

Je nach verwendetem Spektrometertyp sind eventuell individuelle Anpassungen der Messparameter erforderlich.

### Molekulargewichtsverteilungen:

Molekulargewichtsverteilungen werden als Gewichtsmittel Mw und als Zahlenmittel Mn bestimmt, wobei die Methode der Gelpermeationschromatographie (GPC bzw. Size Exclusion Chromatographie (SEC)) Anwendung findet mit Polystyrol Standard und Brechungsindexdetektor (RI-Detektor). Wo nicht anders ausgewiesen wird THF als Eluent verwendet und DIN 55672-1 angewendet. Die Polydispersität PD ist der Quotient Mw/Mn.

Der OH-Gehalt der Organopolysiloxane wird nach Zerewitinoff bestimmt.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiele

Beispiele 1 - 2 werden analog DE102013212980 und Beispiele 6-9 nach erfindungsgemäßem Verfahren in einem 300 Liter Loop (Stahl/Emaille) mit nachgeschalteter kontinuierlicher Phasentrennung hergestellt. Die so erhaltene Rohware wird destillativ vom Lösemittel befreit.

### Herstellbeschreibung für nicht erfindungsgemäße Beispiele 1 und 2 analog DE 102013212980

22kg/h Dimethyldichlorsilan, 335,2kg/h Phenyltrichlorsilan und 204,8kg/h Methyltriethoxysilan werden zusammen mit 1400kg/h Wasser sowie 900 kg/h Toluol parallel über eine Mischstrecke in einen Loop geführt. Folgende Prozessparameter stellen sich ein: Verweilzeit Minuten: 5-10
Reaktionstemperatur °C: 60-65
HCl-Konzentration in Wasserphase: 10-15 Gew.-%
Festgehalt (=Harz in Toluol gelöst): 25-30 Gew.-%
In Tabelle 1 sind die Molekulargewichte aufgeführt:

**Tabelle 1:**

| Beispiel | Mw | Mn | PD | Chlorsilan Gew% | Alkoxysilan Gew% |
|---|---|---|---|---|---|
| 1 | 8100 | 2000 | 4,07 | 64 | 36 |
| 2 | 7700 | 2000 | 3,86 | 63 | 37 |

### Herstellbeschreibung für Beispiel 3-6 nach erfindungsgemäßem Verfahren

22kg/h Dimethyldichlorsilan, 335,2kg/h Phenyltrichlorsilan und 204,8kg/h Methyltriethoxysilan werden über einen vor dem Loop befindlichen Behälter zusammengeführt, die Verweilzeit von 0,25-1,0h wird über die entsprechenden zum Loop führenden Dosierraten des Silangemisches eingestellt.
Das so vorkonditionierte Silangemisches wird zusammen mit 1400kg/h Wasser sowie 900 kg/h Toluol parallel über eine Mischstrecke in einen Loop geführt. Folgende Prozessparameter stellen sich ein:
Verweilzeit Minuten: 5-10
Reaktionstemperatur °C: 60-65
HCl-Konzentration in Wasserphase: 10-15 Gew.-%
Festgehalt (=Harz in Toluol gelöst): 25-30 Gew.-%
In Tabelle 2 sind die Molekulargewichte aufgeführt:

**Tabelle 2:**

| Beispiel | Mw | Mn | PD | Chlorsilan Gew% | Alkoxysilan Gew% | Verweilzeit h Silangemisch |
|---|---|---|---|---|---|---|
| 4 | 2500 | 1300 | 1,9 | 64 | 36 | 0,6 |
| 5 | 2400 | 1100 | 2,2 | 64 | 36 | 0,66 |
| 6 | 2400 | 1200 | 2,0 | 64 | 36 | 0,66 |
| 7 | 2800 | 1300 | 2,1 | 64 | 36 | 0,6 |

## Patentansprüche

1. Kontinuierliches Verfahren zur Herstellung von Organopolysiloxanen mit einem OH-Gehalt von 3,0 - 10,0 Gew.-%,
bei dem Silane der allgemeinen Formel I
R¹ₘSiR²ₙXₒ (I),
in der
**R¹** C₁-C₁₈-Kohlenwasserstoffrest und
**R²** C₁-C₆-Alkoxyrest und
**X** Chlor- oder Bromrest
**m** die Werte 1, 2 oder 3 bedeuten,
**n** die Werte 0, 1, 2 oder 3 bedeuten und
**o** die Werte 0, 1, 2 oder 3 bedeuten,
mit der Maßgabe, dass 4-m = n+o, und dass bei mindestens 30 Mol-% der Silane der allgemeinen Formel I n≠0 und o≠0, Wasser und unpolares nicht mehr als 1 g in 1 l Wasser bei 20°C und 1 bar lösliches Lösemittel kontinuierlich zum Reaktionsgemisch zudosiert werden und Reaktionsgemisch kontinuierlich abgeführt wird.

2. Verfahren nach Anspruch 1, bei dem die Silane der allgemeinen Formel I, Wasser und das unpolare Lösemittel kontinuierlich in einen Loopreaktor zum Reaktionsgemisch zudosiert werden und das Reaktionsgemisch aus dem Loopreaktor kontinuierlich abgeführt wird.

3. Verfahren nach einem oder mehreren der vorangehenden Ansprüche, bei dem die C₁-C₁₈-Kohlenwasserstoffreste **R¹** ausgewählt werden aus Methyl-, Ethyl-, Propyl- und Phenylresten.

4. Verfahren nach einem oder mehreren der vorangehenden Ansprüche, bei dem 10 bis 90 Mol-% der C₁-C₁₈-Kohlenwasserstoffreste **R¹** Phenylreste sind.

5. Verfahren nach einem oder mehreren der vorangehenden Ansprüche, bei dem die C₁-C₆-Alkoxyreste **R²** ausgewählt werden aus Methoxy- und Ethoxyresten.

6. Verfahren nach einem oder mehreren der vorangehenden Ansprüche, bei dem mindestens 80 Mol-% der Silane der allgemeinen Formel I **m** die Werte 1 oder 2 aufweisen.

7. Verfahren nach einem oder mehreren der vorangehenden Ansprüche, bei dem das Wasser in solchen Mengen zudosiert wird, dass sich die HCl-Konzentration in der Wasserphase von 5 - 35 Gew.-% einstellt.

8. Verfahren nach einem oder mehreren der vorangehenden Ansprüche, bei dem das unpolare Lösemittel ausgewählt wird aus Kohlenwasserstoffen.

9. Verfahren nach einem oder mehreren der vorangehenden Ansprüche, bei dem die Silane der allgemeinen Formel I dadurch hergestellt werden, dass Halogensilane der allgemeinen Formel III
R¹_{q}SiX_{4-q} (III),
und Alkoxysilane der allgemeinen Formel IV
R¹ᵣSiR²₄₋ᵣ (IV),
miteinander umgesetzt werden, wobei
**R¹** C₁-C₁₈-Kohlenwasserstoffreste,
**R²** C₁-C₆-Alkoxyrest,
**X** Chlor- oder Bromrest und
**q, r** die Werte 1, 2 oder 3 bedeuten.

## Claims

1. Continuous process for producing organopolysiloxanes having an OH content of 3.0 - 10.0% by weight,
in which silanes of the general formula I
R¹ₘSiR²ₙXₒ (I),
in which
**R¹** is a C₁-C₁₈-hydrocarbon radical and
**R²** is a C₁-C₆-alkoxy radical and
**X** is a chlorine or bromine radical
**m** denotes the values 1, 2 or 3,
**n** denotes the values 0, 1, 2 or 3 and
**o** denotes the values 0, 1, 2 or 3,
with the proviso that 4-m = n+o, and that in at least 30 mol% of the silanes of the general formula I, n≠0 and o≠0,
that water and non-polar solvent, soluble to an extent of not more than 1 g in 1 1 of water at 20°C and 1 bar, are metered in continuously to the reaction mixture and that reaction mixture is continuously discharged.

2. Process according to Claim 1, in which the silanes of the general formula I, water and the non-polar solvent are metered in continuously to the reaction mixture in a loop reactor and the reaction mixture is discharged continuously from the loop reactor.

3. Process according to one or more of the preceding claims, in which the C₁-C₁₈-hydrocarbon radicals **R¹** are selected from methyl, ethyl, propyl and phenyl radicals.

4. Process according to one or more of the preceding claims, in which 10 to 90 mol% of the C₁-C₁₈-hydrocarbon radicals **R¹** are phenyl radicals.

5. Process according to one or more of the preceding claims, in which the C₁-C₆-alkoxy radicals **R²** are selected from methoxy and ethoxy radicals.

6. Process according to one or more of the preceding claims, in which at least 80 mol% of the silanes of the general formula I have the values 1 or 2 for **m.**

7. Process according to one or more of the preceding claims, in which water is metered in in amounts such that the HCl concentration in the water phase of 5 - 35% by weight is established.

8. Process according to one or more of the preceding claims, in which the non-polar solvent is selected from hydrocarbons.

9. Process according to one or more of the preceding claims, in which the silanes of the general formula I are produced by reacting halosilanes of the general formula III
R¹_{q}SiX_{4-q} (III),
and alkoxysilanes of the general formula IV
R¹ᵣSiR²₄₋ᵣ (IV),
with each other, where
**R¹** are C₁-C₁₈-hydrocarbon radicals,
**R²** is a C₁-C₆-alkoxy radical,
**X** is a chlorine or bromine radical and
**q, r** denote the values 1, 2 or 3.

## Revendications

1. Procédé en continu pour la préparation d'organopolysiloxanes présentant une teneur en OH de 3,0-10,0% en poids,
des silanes de formule générale I
R¹ₘSiR²ₙXₒ (I),
R¹ représentant un radical C₁₋₁₈-hydrocarboné et
R² représentant un radical C₁₋₆-alcoxyle et
X représentant un radical chlore ou brome,
m valant 1, 2 ou 3,
n valant 0, 1, 2 ou 3 et
o valant 0, 1, 2 ou 3,
étant entendu que 4-m = n + o et que n ≠ 0 et o ≠ 0 dans au moins 30% en mole des silanes de formule générale I,
de l'eau et un solvant apolaire, soluble dans l'eau à raison d'au plus 1 g pour 1 L d'eau à 20°C et à 1 bar, étant ajoutés au mélange réactionnel de manière continue et le milieu réactionnel étant évacué de manière continue.

2. Procédé selon la revendication 1, les silanes de formule générale I, l'eau et le solvant apolaire étant ajoutés de manière continue au mélange réactionnel dans un réacteur à circulation en boucle et le milieu réactionnel étant évacué de manière continue du réacteur à circulation.

3. Procédé selon l'une ou plusieurs des revendications précédentes, les radicaux C₁₋₁₈-hydrocarbonés étant choisis parmi les radicaux méthyle, éthyle, propyle et phényle.

4. Procédé selon l'une ou plusieurs des revendications précédentes, 10 jusqu'à 90% en mole des radicaux C₁₋₁₈-hydrocarbonés étant des radicaux phényle.

5. Procédé selon l'une ou plusieurs des revendications précédentes, les radicaux C₁₋₆-alcoxyle **R²** étant choisis parmi les radicaux méthoxyle et éthoxyle.

6. Procédé selon l'une ou plusieurs des revendications précédentes, au moins 80% en mole des silanes de formule générale I présentant des valeurs de m égales à 1 ou 2.

7. Procédé selon l'une ou plusieurs des revendications précédentes, l'eau étant ajoutée en des quantités telles que la concentration en HCl dans la phase aqueuse est ajustée dans la plage 5-35% en poids.

8. Procédé selon l'une ou plusieurs des revendications précédentes, le solvant apolaire étant choisi parmi les hydrocarbures.

9. Procédé selon l'une ou plusieurs des revendications précédentes, les silanes de formule générale I étant préparés par la mise en réaction d'halogénosilanes de formule générale III
R¹_{q}SiX_{4-q} (III),
avec des alcoxysilanes de formule générale IV
R¹ᵣSiR²₄₋ᵣ (IV),
R¹ représentant des radicaux C₁₋₁₈-hydrocarbonés,
R² représentant un radical C₁₋₆-alcoxyle,
X représentant un radical chlore ou brome et
q, r valant 1, 2 ou 3.
